# EUROPEAN PATENT APPLICATION

(11) **EP 4 813 614 A1**
(43) Date of publication of application: **30.09.2026**
(21) Application number: 26166805.7
(22) Date of filing: 23.03.2026
(51) Int. Cl.: B29C 65/16, B29C 65/48, B29C 65/50, B29L 31/30

(54) **METHOD AND APPARATUS FOR APPLYING A DOUBLE-SIDED ADHESIVE TAPE TO A SUPPORT**

(30) Priority: 24.03.2025 IT 202500005913
(71) Applicant: Tecnofive s.r.l., 10019 Strambino (TO) (IT)
(72) Inventor: FURNO, Davide, I-10019 STRAMBINO (Torino) (IT); ROSSI, Marco, I-10019 STRAMBINO (Torino) (IT); GOLETTO, Ezio, I-10080 SALASSA (Torino) (IT)
(74) Representative: Savoca, Agatino

(57) **Abstract**

A method for applying a thermo-activatable double-sided adhesive tape comprises the steps of providing a thermo-activatable double-sided adhesive tape (10) and a support (20) onto which said thermo-activatable double-sided adhesive tape (10) is to be adhered; hitting at least one portion of said double-sided adhesive tape (10) with a laser light from at least one emitter (30) capable of projecting a laser light beam (33) with a quadrangular focal spot, up to activating at least one area of double-sided adhesive tape (10); and bringing said at least one activated area of double-sided adhesive tape (10) and said support (20) into contact with each other at a contact area.

## Description

### Technical field

The present invention relates to a method and an apparatus for applying a thermo-activatable double-sided adhesive tape onto a support.

More specifically, the present invention relates to a method which optimizes the process of applying a thermo-activatable double-sided adhesive tape onto a support, conventionally a support made of elastomeric material, thermoplastic material, PVC, silicones, etc..

It is also the object of the present invention an apparatus adapted to apply a double-sided adhesive tape onto a support.

### Background art

The use of double-sided adhesive tapes is known in various industrial fields, including the automotive sector, to obtain the adhesion by gluing, for example, of gaskets made of elastomeric material, thermoplastic material, PVC, silicones and the like, onto surfaces of various kinds.

The use of gaskets, in particular, is increasingly widespread in various sectors. Such gaskets must ensure a hermetic sealing during the closing, for example, of the door of a motor vehicle onto which they are applied.

In the process of assembling such gaskets onto the designated surfaces, for example onto the metal surface of a door (still assuming, as a non-limiting example of application, the field of vehicles), the gaskets arrive on the assembly line already provided with a double-sided adhesive tape for fastening the gasket onto the surface.

Such double-sided adhesive tape is previously adhered to the gasket by an application technique which provides for the use of a suitable heat source, as known, to activate the double-sided adhesive tape.

The market not only requires continuous applications of double-sided adhesive tape onto a support, but also intermittent applications, i.e., applications wherein parts of support provided with double-sided adhesive tape alternate with portions of support in which the double-sided adhesive tape is not positioned. This requires the use of automatic apparatuses for applying double-sided adhesive tape which are responsive and provided with an instantaneous heat source, free of transient phenomena, and the temperature of which must be instantaneously controlled.

Known methods for applying a double-sided adhesive tape provide for the use of an apparatus provided with pulleys opposed to each other, through which the double-sided adhesive tape and the support onto which said double-sided adhesive tape is to be applied are made to pass simultaneously.

The two pulleys shall exert a regular and constant pressure between the two elements (double-sided adhesive tape and support), and, in order for the coupling to take place correctly, both elements must be aligned and guided in a linear and constant manner during the step of being inserted into the pulleys.

The adhesion of the double-sided adhesive tape onto the support surface may occur cold, using primers and glues, or, in the case of the thermo-activatable double-sided adhesive tapes considered herein, by means of the thermo-activation of the glues already present in the double-sided adhesive tape. Such glues are activated at a predetermined temperature, which therefore represents a fundamental parameter of the adhesion process.

During the adhesion process of a thermo-activatable adhesive onto a support, it is therefore essential to heat the joining area between the adhesive and the support up to the activation temperature of the adhesive, and it is essential for the correct outcome of the process that such temperature be kept constant, uniform throughout the entire adhesion area, and that there be no transients during the process, for example related to reaching the activation temperature during the step of initiating the process.

Currently, methods and apparatuses of the known type employ heating elements such as, for example, a hot air emitter (a dryer) and heating resistors, which, when correctly oriented, bring the thermo-activatable adhesive up to the desired activation temperature.

The process provides, as said, a heating not only of the adhesive tape but also of the support, for example formed by the gasket, which, as said, is hit by the hot air and is therefore also considerably heated.

The heating of the support is another fundamental aspect for the successful outcome of the adhesive adhesion process, and for this purpose, providing infrared lamps with high heating power, raising the temperature of the support before the application of the double-sided adhesive tape, is known.

Known methods for applying a thermo-activatable double-sided adhesive tape, however, have several drawbacks.

First, the use of heating elements, such as hot-air emitters and heating resistors results, due to the impossibility of concentrating the action of the heat source at one point, in heating also the parts of the apparatus surrounding the joining point between the double-sided adhesive tape and the support, thereby compromising the quality of the final result.

Indeed, an uncontrolled increase of the temperature of the pulleys which carry the double-sided adhesive tape may, for example, cause damage to the liner, namely, to that very thin part of the tape which is applied onto the surface of the double-sided adhesive tape to cover the area not in contact with the support and which is removed when the support has to be glued onto the final product, for example onto the door of a vehicle.

Another drawback affecting the methods of the known type is represented by the risk of prematurely activating the thermo-activation process of the adhesive when the double-sided adhesive tape and the support are not in the correct mutual coupling position inside the pulleys yet.

A further drawback affecting the methods of the known type consists in the risk that the marked increase in the temperature of the support causes a deformation due to the thermal expansion thereof.

Since the support has a thermal coefficient different from that of the double-sided adhesive tape to which it is to be coupled, the thermal deformation of the support may cause mechanical stresses subsequent to the application of the double-sided adhesive tape and to the cooling of the elements, which may bend the gasket itself or curl the liner, and therefore, ultimately, the double-sided adhesive tape.

To reduce the effects of overheating it is necessary, with the methods and apparatuses of the known type, to cool by liquid means, namely by jets of water, all the parts affected by the undesired heating, with a considerable increase in the costs and in the size of the apparatus which operates the adhesion.

Furthermore, apparatuses of the known type which employ heating means as described require relatively long times before the process of applying the double-sided adhesive tape stabilizes, since there is a transitory step so that the activation temperature of the adhesive is reached, the achievement of the desired temperature by the heating means not being instantaneous. This transient step inevitably creates waste material each time the adhesion process is initiated and before it reaches a steady state.

The background art also contemplates the solution of employing two non-cofocal laser light sources, arranged side by side so that they project, at the contact area of the tape with the support, two partially overlapping cylindrical light beams.

A solution of the aforesaid type is known, for example, from EP 3212382 A1, which shows a method and an apparatus for applying thermo-activatable double-sided adhesive tape to a support, comprising at least two laser light emitters, each provided with an optical collimator capable of projecting a cylindrical laser light beam onto at least one portion of such double-sided adhesive tape.

However, since the energy distribution is of the Gaussian type, the energy at the center of the cylinder is greater with respect to the outside, and although the convergence of the two laser beams tends to partially compensate such non-uniformity, so that in the overlap region the energy is distributed in a more uniform manner, there is in any case the issue that the tape is subjected to heat of an intensity varying in space and in time.

A further example of application of a thermo-activatable double-sided adhesive tape onto a support is known from document US 2025/058532 A1, which describes an apparatus which uses a laser source for activating the adhesive layer, wherein the beam is directed toward the contact point by means of a system of galvanometric or reflective mirrors.

Although such a configuration allows the ray to be deflected over wide surfaces, critical limitations become apparent for precision applications.

In particular, the system described therein provides for the use of high laser powers, which are incompatible with many thermo-activatable adhesives, for example in the automotive field.

Such materials indeed require compliance with a predetermined thermal threshold, where instead a laser sized according to the approach of such an example would impart such heat as to exceed such temperatures, thus causing the polymeric degradation of the adhesive or damage to the support.

Furthermore, the mirror-based technology according to the aforesaid example is inherently subject to beam divergence phenomena and variations in energy density based on the angle of incidence. This makes the maintenance of a uniform and controlled heating along the entire application line difficult.

Such conditions, understandably, limit the possibility of perfectly applying the tape onto the support.

### Summary of the invention

It is an object of the present invention to provide a method and an apparatus for applying a thermo-activatable double-sided adhesive tape onto a support, thus allowing the drawbacks encountered with the methods and apparatuses of the known type to be resolved.

It is also an object of the present invention to provide a method allowing to completely eliminate the heating step of the heating means, thus considerably reducing, if not even completely eliminating, waste, and at the same time to completely eliminate the issues of deformation of the support due to the heating thereof.

It is a further object of the present invention to provide a method for applying a thermo-activatable double-sided adhesive tape onto a support, thus allowing an instantaneous, controllable, and localized heating of the adhesion area between the double-sided adhesive tape and the support.

Not least, it is an object of the present invention to provide a method wherein only the portions of the support involved in the application of the adhesive are heated, and not the entire support.

It is also an object of the present invention to provide an apparatus for applying a thermo-activatable double-sided adhesive tape onto a support, preferably allowing the implementation of the method which is the object of the present invention, and which is simpler to manufacture and therefore more cost effective.

In particular, it is the object of the present invention to provide an apparatus for applying a thermo-activatable double-sided adhesive tape onto a support which does not require cooling means and which offers extensive adjustment possibilities and a precise control of the induced heating.

In order to apply a thermo-activatable tape onto a surface of thermoplastic material or rubber, according to an embodiment of the present invention, it is provided that the tape, preferably having a constant width, is unwound/laid, by using, for example, a pulley, on a surface onto which it will be sealed by means of heating from a laser source.

Preferably, the laser source will simultaneously heat the two surfaces before they come into contact, so as to adhere to each other.

The heating energy of the laser may conveniently be directly correlated with the speed of rotation of the pulley and/or the linear displacement speed of the tape. As the linear laying speed of the tape increases, the power delivered by the laser may also increase, for example in linear proportion.

The heating capacity of the laser is directly correlated with the exposure time of the surfaces of interest, and/or with the angle of incidence thereof with respect to the surfaces of interest of the heating. For example, the angle of incidence used to apply the tape onto a thermoplastic material may be different from that used for application on rubber.

The entire area covered by the laser spot is to be suitably subjected to the same energy intensity.

To this end, in accordance with the invention, at least one laser light emitter is used, comprising an optical collimator configured to project a laser light beam with a quadrangular focal spot (for example, a rectangular- or square-shaped spot), capable of hitting at least one portion of the double-sided adhesive tape.

Unlike the prior art described above, the use of a collimator allows generating a parallel-ray beam with a constant intensity profile. This element ensures that the energy delivered remains within the activation limits of the adhesive, thus avoiding localized heat peaks conventional of scanning systems or moving-mirror systems. Thereby, while the systems according to the prior art employ delivered power incompatible with many applications, a solution according to the present invention may integrate precise control of the interface temperature, made possible by the optical stability of the collimated system.

Indeed, the use of the collimator allows the energy to be distributed uniformly over the surface of the adhesive, thus ensuring that the critical degradation temperatures of the polymer are not exceeded. This allows the use of thermosensitive adhesives that would be damaged by the heat spikes conventional of mirror-based systems.

Thereby, the system may operate with laser powers significantly reduced with respect to the background art, since the collimation of the beam minimizes losses due to divergence and optimizes the absorption of energy in the contact area.

By virtue of the constancy of the profile of the collimated beam, the activation of the adhesive may be made uniform across the entire width of the tape, thus eliminating localized adhesion defects common in systems using multiple reflections or rapid scans.

The foregoing regarding the precision of thermal control becomes all the more relevant when a multilayer-type adhesive is adopted, which conventionally comprises a thermo-activatable functional layer, coupled to one or more support or barrier layers. Indeed, a solution according to the present invention may conveniently be configured to modulate the heat input of the collimated beam so as to selectively activate the functional layer without causing delamination of the adjacent layers or of any protective liner.

Preferably, to ensure a uniform distribution of energy throughout the area affected by the laser spot, an optical solution known in the art as "flat-top" may be employed.

To ensure a constant mechanical pressure over the entire surface of the tape, an automatic system capable of dynamically controlling the pressure exerted may be employed.

To heat the two surfaces (of the tape and of the support) simultaneously, it may be appropriate to provide a large laser spot, i.e., larger than the width of the tape.

To obtain a dynamic relation between resulting linear speed and energy delivered by the laser, the system may be provided with servo-assisted movements, suitably capable of coordinating with the laser source (for example, by transmission of signals indicative of operating parameters to/from a control unit).

To maintain the angle of incidence of the laser constant even on curved application surfaces, an automatic self-adjusting motion system may be used.

A solution according to the present invention allows to obtain a perfect coupling between the adhesive tape and the support, by virtue of the uniform distribution of the energy and of the corresponding constant irradiation times on the mutual interface area, so that the adhesive is thereby activated in a uniform manner.

The same factors also allow to achieve a significant energy saving with respect to the known techniques, when one considers in particular conventional systems which employ hot air flows or infrared resistors, wherein case the energy consumption would even be reduced to one third.

The aforesaid and other objects and advantages are achieved, according to an aspect of the invention, by a method and an apparatus having the features defined in the accompanying independent claims. Preferred embodiments of the invention are defined in the dependent claims.

### Brief description of the drawings

The functional and structural features of some preferred embodiments of a method and an apparatus in accordance with the invention will now be described. Reference is made to the accompanying drawings, wherein:

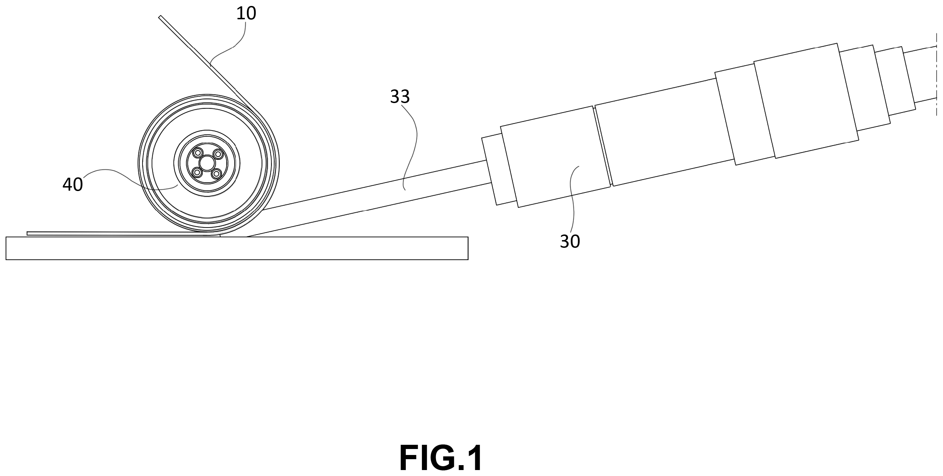

- Figure 1 shows a diagrammatic view of a portion of apparatus according to an embodiment of the present invention;

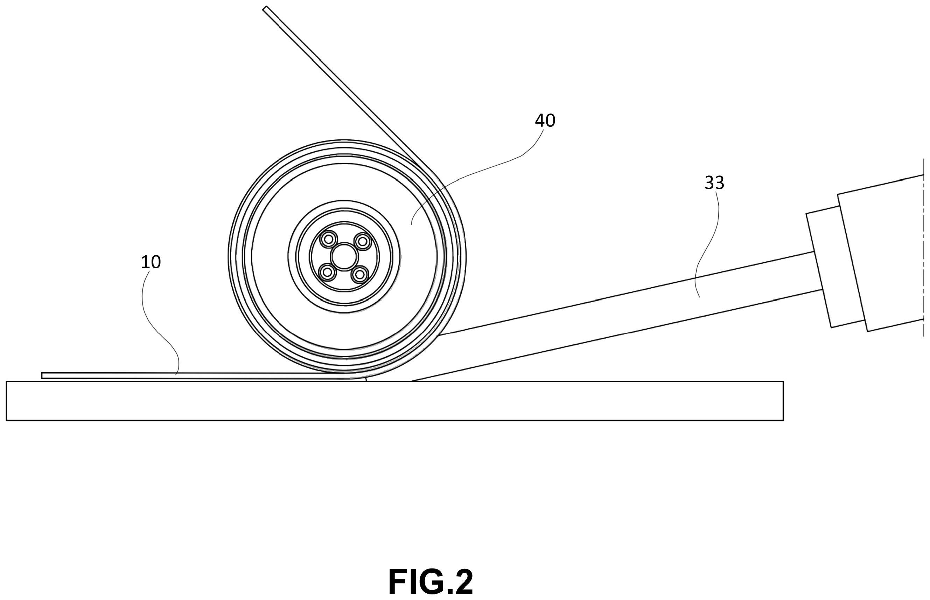

- Figure 2 shows an enlargement of a portion of Figure 1, in which a contact area between tape and support is visible;
- Figures 3A and 3B show two diagrammatic representations of a quadrangular focal spot and a circular spot according to the prior art, and
- Figure 4 shows a diagram of the distribution of the energy of the laser beam close to the focal spot, according to an embodiment of the present invention.

### Detailed description

Before explaining a plurality of embodiments of the invention in detail, it is worth noting that the application of the invention is not limited to the constructive details and to the configuration of the components presented in the following description or shown in the drawings. The invention may assume other embodiments and may be implemented or made in practice in different manners. It should also be understood that the phraseology and terminology serve a descriptive purpose and should not be understood as limiting.

Making reference by way of example to the Figures, a method for applying a thermo-activatable double-sided adhesive tape comprises the steps of:
a) providing a thermo-activatable double-sided adhesive tape 10 and a support 20 onto which said thermo-activatable double-sided adhesive tape 10 is to be adhered;
b) hitting at least one portion of said double-sided adhesive tape 10 with a laser light from at least one laser light emitter 30, said emitter comprising an optical collimator adapted to project a laser light beam 33 with a quadrangular focal spot 35, up to activating at least one area of double-sided adhesive tape 10; and
c) bringing said at least one activated area of double-sided adhesive tape 10 and said support 20 into contact with each other at a contact area.

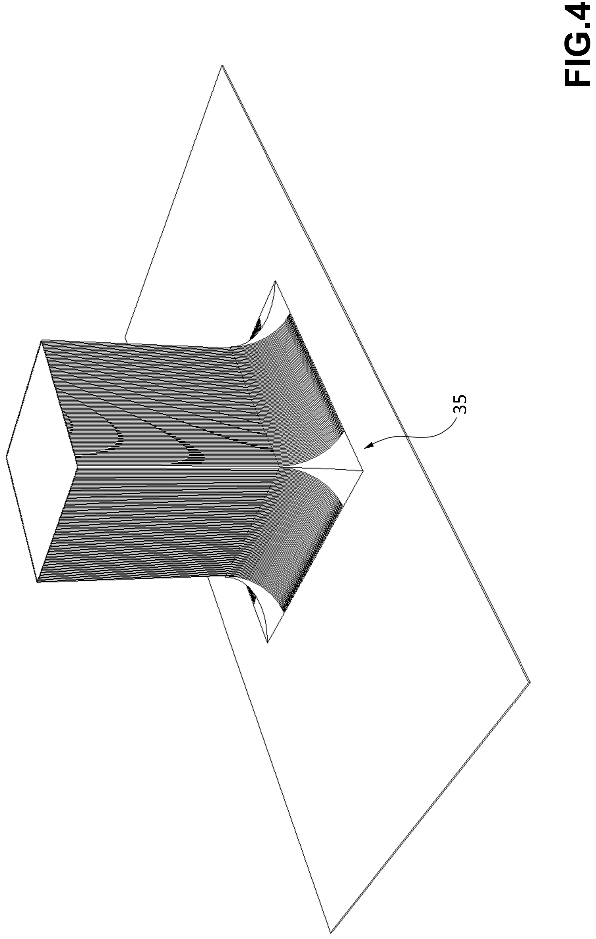

Preferably, there is the step of configuring said emitter 30 and/or said optical collimator so that the laser light beam 33 has a uniform intensity at the focal spot 35. This may be obtained, for example, by configuring said emitter 30 and/or said optical collimator so that the laser beam 33 is of the type known as flat top (wherein the intensity of the laser beam close to the focal point exhibits, for example, the distribution shown in Figure 4).

Preferably, there is the step of configuring said emitter 30 and/or said optical collimator so that the focal spot 35 has a width greater than a transverse dimension of the double-sided adhesive tape 10.

According to an embodiment, the double-sided adhesive tape 10 is a multilayer adhesive comprising a polymeric support layer coupled to a thermo-activatable functional layer.

Preferably, said thermo-activatable functional layer has an activation temperature lower than the softening temperature of said support layer.

The double-sided adhesive tape 10 may preferably comprise three laminated layers, which include two adhesive layers deposited at the surface to adhere to plastic and/or metal materials, and a support layer of viscoelastic foam.

Preferably, said functional layer is formulated to polymerize or activate within a thermal range from 120°C to 200°C, and/or to be employed within an operating temperature range from -40°C to +120°C.

Conveniently, there may be the step of adjusting the power delivered by the laser light emitter 30 and/or the relative sliding speed between the focal spot 35 and the adhesive tape 10 and/or the support 20, so that the temperature reached by the adhesive tape 10 and/or by the support 20 at such focal spot 35 is from 120°C to 200°C. The relative sliding speed between the focal spot 35 and the adhesive tape 10 and/or the support 20 may, for example, be determined by feeding the adhesive tape 10 along the support 20 at a predetermined speed.

For example, the double-sided adhesive tape 10 may be of a type similar to that identified by the commercial designation "Acrylic Plus Tape WT4112", produced by 3M.

According to a preferred embodiment, the laser light emitter 30 has a power from 100W to 500W.

Preferably, there is the step of hitting at least one portion of said support 20 with said laser light beam 30 from said emitter 33.

Preferably, there is the step of moving the emitter 30 and directing the laser light beam 33 onto at least one predetermined portion of said double-sided adhesive tape 10 by means of a robotic arm (preferably having at least two degrees of freedom) and/or one or more servomotors.

The step of applying a pressure between the support 20 and the double-sided adhesive tape 10 may be present.

There may also be present a wheel 40 from which the double-sided adhesive tape 10 is unwound to be laid on the support 20, the tape 10 being interposed between said wheel 40 and said support 20. According to an embodiment, such wheel 40 may be configured to exert a pressure on the tape 10 so that it adheres onto the support 20, and preferably may comprise adjustment means capable of adjusting the distance of the wheel 40 from the support 20, and therefore the compressive pressure exerted on the tape 10.

According to an embodiment, the laser light emitter 30 is capable of generating a light having a wavelength equal to 808 nanometers. This wavelength is such that the light is absorbed by dark-colored plastic items, such as, conventionally, the double-sided adhesive tape 10 and the support 20, accumulating thermal energy.

The laser light generated by a laser diode is preferably conveyed by means of an optical fiber 32 of 600 µm, up to the optical collimator, which is oriented toward the contact point between the double-sided adhesive tape 10 and the support 20.

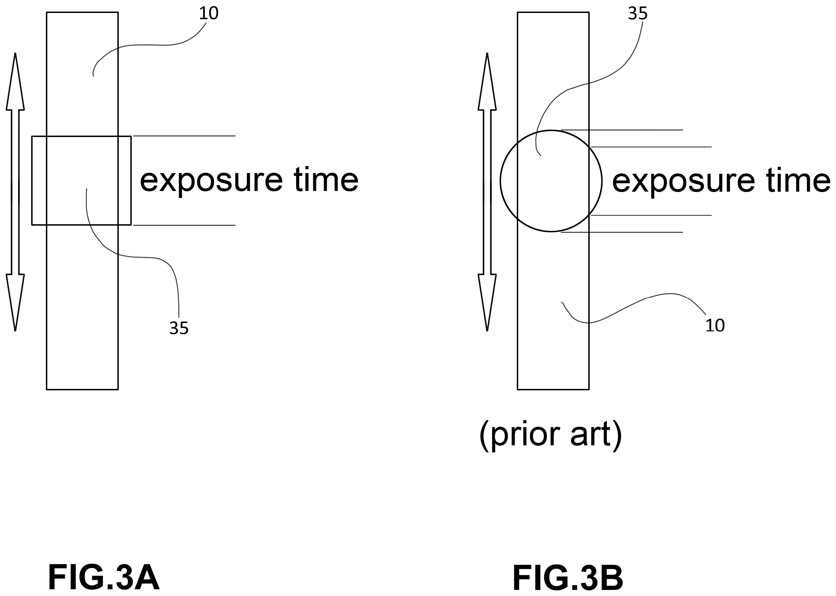

By irradiating the double-sided adhesive tape 10 with a quadrangular focal spot 35, at the same sliding speed, a constant exposure time for a section of such tape to the heat source is obtained (as, for example, shown in Figure 3A), while with a circular spot the exposure is variable (as, for example, shown in Figure 3B). This allows to irradiate the surface of the tape 10 in an optimal manner, without local differences in exposure (which may on the one hand overheat the tape, and on the other not provide sufficient heat), and to reduce the energy employed in the process. In fact, in the case of a quadrangular spot, the laser always hits the tape over the entire width of the latter along the sliding direction thereof, and therefore the laser exposure time of a section of the tape is constant.

Instead, in the case of a circular spot, the laser hits the tape in a point-like manner at the outmost point of the circular edge of the spot along the sliding direction of the tape, widening until it hits the tape across the entire width thereof. Such condition occurs until the next intersection of the circular edge of the spot with the edge of the tape, after which the footprint of the spot on the tape decreases until it returns to being point-like. The time for which a section of the tape, along the sliding direction, remains exposed to the laser will vary depending on how much of the spot is in transverse overlap with the tape, and is minimum (and/or increasing) from the point-like overlap condition up to a first intersection of the circular edge of the spot with the edge of the tape, maximum (and/or constant) up to the subsequent intersection of the circular edge of the spot with the edge of the tape, and minimum (and/or decreasing) from this latter condition up to the point-like superposition condition, as shown by way of example in Figure 3B.

By optimizing the distribution of energy, and hence of heat, in the contact area between the double-sided adhesive tape 10 and the support 20, the desired activation of the glues is achieved on the double-sided adhesive tape and on the support. In the case where the latter, for example, consists of a rubber gasket, it is possible to burn the surface oils thereof in an optimal manner.

According to a further aspect of the present invention, an apparatus for applying a thermo-activatable double-sided adhesive tape 10 onto a support 20 comprises at least one laser light emitter 30, which includes an optical collimator capable of projecting a laser light beam 33 with a quadrangular focal spot 35 onto at least one portion of said double-sided adhesive tape 10.

The emitter 30 and/or the optical collimator may be configured so that the laser light beam 33 has a uniform intensity at the focal spot 35.

The emitter 30 and/or the optical collimator may be configured so that the laser light beam 33 is of the flat top type. In the art, a laser beam whose energy density or irradiance remains constant along a cross-section of the beam is named flat-top (or top-hat) (for example, as shown in Figure 4, where the vertical direction is indicative of the energy density value with respect to the plane of the spot). In other words, a laser beam of this type has a flat intensity curve for the greater part of the spot area.

The emitter 30 and/or the optical collimator may be configured so that the focal spot 35 has a width greater than a transverse dimension of the double-sided adhesive tape (10).

There may be a robotic arm capable of moving the emitter 30 and of pointing the laser light beam 33 on at least one predetermined portion of said double-sided tape 10.

The apparatus may further comprise a temperature measuring device capable of instantaneously monitoring the temperature reached by the portion of double-sided adhesive tape 10 hit by the laser light.

At least one central control unit may be present which includes at least one data acquisition module configured to receive in input process parameter values, at least one memory module configured to store process parameter reference values, and at least one comparison and adjustment module configured to compare the input process parameters with the reference parameter values stored in the memory module and to change the operating parameters of the apparatus accordingly.

The apparatus may further comprise at least one control panel for operator input of the process parameters.

Various aspects and embodiments of a method and an apparatus according to the invention have been described. It is understood that each embodiment may be combined with any other embodiment. Furthermore, the invention is not limited to the described embodiments, but may be varied within the scope defined by the accompanying claims.

## Claims

1. A method for applying a thermo-activatable double-sided adhesive tape, comprising the steps of:
a) providing a thermo-activatable double-sided adhesive tape (10) and a support (20) onto which said thermo-activatable double-sided adhesive tape (10) is to be adhered;
b) hitting at least one portion of said double-sided adhesive tape (10) with a laser light from at least one laser light emitter (30), said emitter comprising an optical collimator capable of projecting a laser light beam (33) with a quadrangular focal spot (35), up to activating at least one area of double-sided adhesive tape (10);
c) bringing said at least one activated area of double-sided adhesive tape (10) and said support (20) into contact with each other at a contact area.

2. A method according to claim 1, further comprising the step of configuring said emitter (30) and/or said optical collimator so that the laser light beam (33) has a uniform intensity at the focal spot (35).

3. A method according to claim 2, comprising the step of configuring said emitter (30) and/or said optical collimator so that the laser light beam (33) is of the "flat top" type.

4. A method according to any one of the preceding claims, wherein the double-sided adhesive tape (10) is a multilayer adhesive comprising a polymeric support layer coupled to a thermo-activatable functional layer.

5. A method according to claim 4, wherein said thermo-activatable functional layer has an activation temperature lower than the softening temperature of said support layer.

6. A method according to claim 4 or 5, wherein the double-sided adhesive tape (10) comprises three laminated layers, which include two adhesive layers deposited at the surface to adhere to plastic and/or metal materials, and a support layer of viscoelastic foam.

7. A method according to one of claims 4 to 6, wherein said functional layer is formulated to polymerize or activate within a temperature range from 120°C to 200°C.

8. A method according to any one of the preceding claims, wherein there is the step of adjusting the power delivered by the laser light emitter (30) and/or the relative sliding speed between the focal spot (35) and the adhesive tape (10) and/or the support (20), so that the temperature reached by the adhesive tape (10) and/or by the support (20) at said focal spot (35) is from 120°C to 200°C.

9. A method according to any one of the preceding claims, wherein the laser light emitter (30) has a power from 100W to 500W.

10. A method according to any one of the preceding claims, comprising the step of configuring said emitter (30) and/or said optical collimator so that the focal spot (35) has a width greater than a transverse dimension of the double-sided adhesive tape (10).

11. A method according to any one of the preceding claims, comprising the step of hitting at least one portion of said support (20) with said laser light beam (30) from said emitter (33).

12. A method according to any one of the preceding claims, comprising the step of moving the emitter (30) and directing the laser light beam (33) onto at least one predetermined portion of said double-sided adhesive tape (10) by means of a robotic arm.

13. A method according to any one of the preceding claims, comprising the step of applying pressure between said support (20) and said double-sided adhesive tape (10).

14. An apparatus for applying a thermo-activatable double-sided adhesive tape (10) onto a support (20), **characterized in that** it comprises at least one laser light emitter (30), said emitter comprising an optical collimator capable of projecting a laser light beam (33) with a quadrangular focal spot (35) onto at least one portion of said double-sided adhesive tape (10).

15. An apparatus according to claim 14, wherein said emitter (30) and/or said optical collimator are configured so that the laser light beam (33) has a uniform intensity at the focal spot (35), and/or wherein the laser light emitter (30) has a power from 100W to 500W, and/or wherein said apparatus is configured so that the power delivered by the laser light emitter (30) and/or the relative sliding speed between the focal spot (35) and the adhesive tape (10) and/or the support (20), are such that the temperature reached by the adhesive tape (10) and/or the support (20) at said focal spot (35) is from 120°C to 200°C.
